# EUROPEAN PATENT SPECIFICATION

(11) **EP 0 623 098 B1**
(45) Date of publication and mention of the grant of the patent: **16.04.1997**
(21) Application number: 93902276.0
(22) Date of filing: 21.01.1993
(51) Int. Cl.: C02F 1/74, C02F 1/64, E03B 11/06

(54) **APPARATUS FOR THE OXIDATION OF WATER**
VORRICHTUNG ZUM OXYDIEREN VON WASSER
APPAREIL POUR OXYDER L'EAU

(30) Priority: 21.01.1992 FI 920129
(43) Date of publication of application: 09.11.1994
(73) Proprietor: Sinkkilä, Aarre, SF-16630 Tennilä (FI)
(72) Inventor: Sinkkilä, Aarre, SF-16630 Tennilä (FI)
(74) Representative: Charlton, Peter John
(86) International application number: FI9300021
(87) International publication number: WO9314035

(56) References cited:
- AT-B- 308 007
- DE-A- 2 106 491
- DE-C- 234 253
- DERWENT'S ABSTRACT, No. 90-273458/36, week 9036; & SU,A,1540754 (SADOVNIKOV A A), 7 February 1990 (07.02.90).

## Description

The present invention relates to an apparatus for the oxidation of water. An apparatus of the invention is suitable for use in all cases, wherein the water-intake system includes a pressure tank and a water pump. For example, when drawing well water, such equipment is already there and thus the oxidation of well water can be effected with the invention at very little extra costs. There are also a large number of various reservoirs, both natural and man-made reservoirs, wherein the dissolution of oxygen in water would be necessary for the purification of water and the improvement of its quality.

As known in the art, the oxidation can be used for substantially improving the quality of water. For example, well water can be processed to reduce its iron content and various contaminants dissolved in water. However, a problem has been the non-existence of suitable, sufficiently simple and effective oxidizing equipment. If, for example, the operating power of a well-water oxidizing apparatus requires its own electric connection, the equipment and fitting costs will be so high that the project is usually forgotten. On the other hand, by virtue of large-scale manufacturing, the water pumps and pressure tanks are relatively inexpensive pieces of equipment and, thus, can be economically used even where they have not been previously required for the drawing of water but where an effective oxiding apparatus is needed.

An object of the invention is to provide a simple, effective and inexpensive oxidizing apparatus, which can be adapted to most diversified applications and which only requires a single electric connection for the operation of a water pump.

This object is achieved by means of the invention on the basis of the characterizing features set forth in the appended claim 1.

Three exemplar embodiments of the invention will now be described in more detail with reference made to the accompanying drawing, in which
- fig. 1: is a schematic view showing the structure and operation of one exemplary embodiment of the invention.
- Fig. 2: is a schematic view showing the structure and operation of a second exemplary embodiment.
- Fig. 3: is a schematic view showing the structure and operation of a third exemplary embodiment.

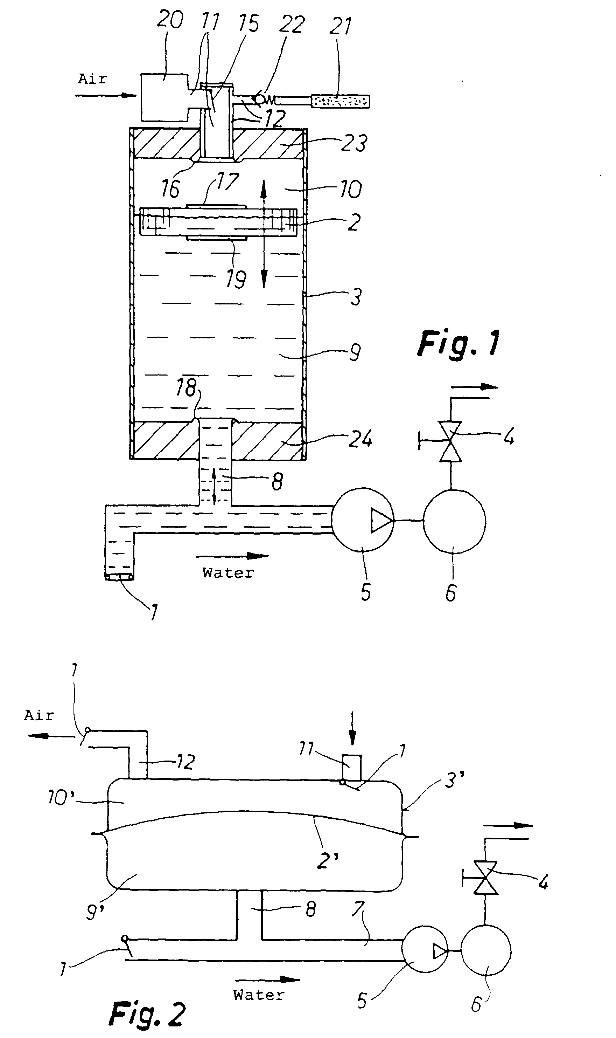

The embodiment of fig. 1 will be described first as adapted to the oxidation of well water.

Drawing of water from a well is effected in a conventional fashion by means of a water pump 5 and a pressure tank 6 through an intake pipe 7 and a bottom valve 1. The water is drawn for use from pressure tank 6 through a valve 4. An apparatus of the invention is connected to intake pipe 7 between pump 5 and bottom valve 1.

In the case of fig. 1, a cylinder space 3 is divided by means of a float 2 into two partial chambers 9 and 10, one 9 of which is filled with water and connected with a pipe 8 to intake pipe 7. The other partial chamber 10 is an air chamber and, together with the water surface and float 2, it provides an air pump. Therefore, the partial chamber 10 includes an air intake pipe 11 fitted with a flap valve 15 and an aeration pipe 12 fitted with a one-way valve 22. The aeration pipe 12 is extended with a tube or a hose so as to extend to a suitable depth into the well water. The end of this tube or hose is fitted with an air diffuser 21 for the diffusion of air in finely divided bubbles in water. In order not to make air pipe or tube 22 too long and capacious, which would deteriorate the efficiency due to the compressibility of air, said cylinder 3 can be located close to the water surface level or on the water surface. The air intake pipe 11 is provided with a filter 20.

The top end of cylinder 3 is closed with a plug 23 provided with an annular bulge 16, surrounding the bottom end of the coaxial pipe 11, 12 and providing a valve together with a sealing surface 17 which seals the bottom end of pipe 11, 12 as said float 2 rises up. In a similar fashion, a plug 24 closes the bottom end of cylinder 3 and the top end of pipe 8 is surrounded by an annular bulge 18 which is engaged by a sealing 19 as said float 2 comes down to a bottom position.

The embodiment of fig. 2 only differs from the preceding one in the sense that the float 2 is replaced by a rubber membrane 2' for dividing a space 3' into partial chambers 9', 10'.

Operation of the apparatus proceeds as follows. Upon the actuation of pump 5, the vacuum depletes cylinder space 9 (9') and float 2 (or membrane 2') descends, which in turn sucks air through pipe 11 and valve 15 into partial chamber 10 (10'). As the pump stops, the pressure produced in intake pipe 7 urges float 2 (or membrane 2') up and simultaneously the air into pipe 12, from which the air continues to air diffuser 21 located in water.

In practice, the size of space 3, 3' is much smaller than the volume of pressure tank 6, so the apparatus has no significant effect on the capacity and operation of a pressure tank. The volume of space 3, 3' is selected according to a required oxidizing power while taking the size of pressure tank 6 into consideration.

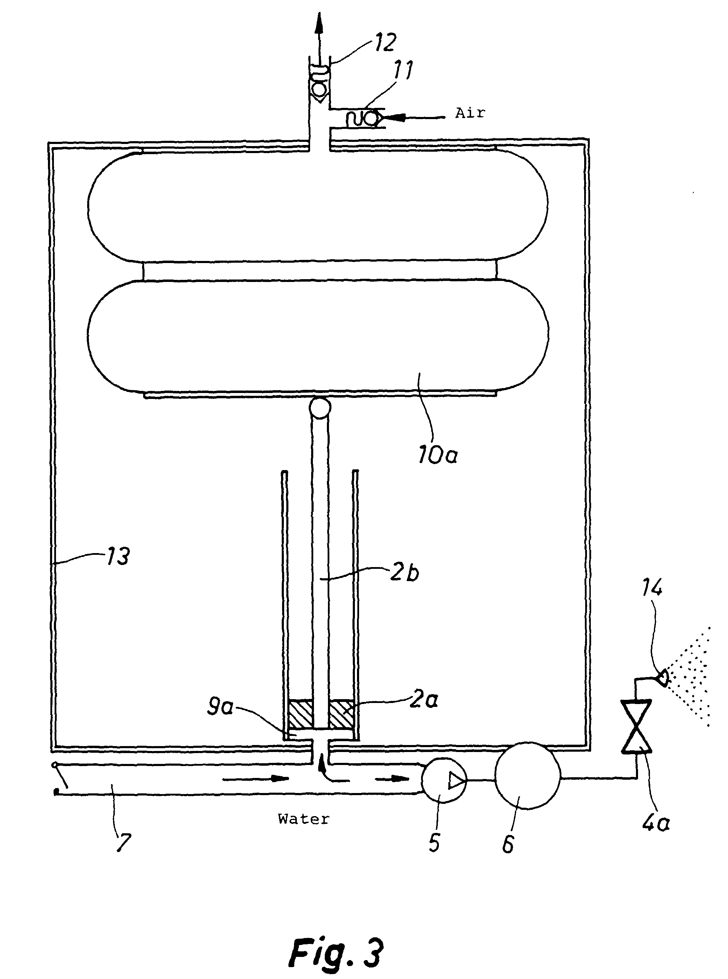

Fig. 3 illustrates an embodiment, wherein the amount of air to be pumped over a single operating cycle can be multiple, even several dozen times more than the effective volume of pressure tank 6. This has been effected by using a separate air bellows 10a receiving its driving force from a piston 2a through the action of a piston rod 2b. The change of volume of bellows 10a is multiple compared to the change of volume of space 9a defined by piston 2a on each pumping strike. A clamping ring 13 retains bellows 10a and cylinder 9a together. This apparatus is particularly suitable for the oxidation of reservoir waters. Thus, the oxidation can be carried out simultaneously in two parallel ways, namely by blowing air into water and by spraying water in the form of finely divided droplets or mist into air for descending it subsequently back into water. For the latter technique, a tube or a hose is used to fit said pressure tank 6 with an atomizing nozzle 14, through which the pressure tank 6 is gradually allowed to deplete (in addition to which, some of the water contained in the pressure tank discharges into cylinder 9a). A valve 4a between pressure tank 6 and atomizing nozzle 14 can be used to control the depletion rate of pressure tank 6 and, thus, the operating cycle frequency of water pump 5.

## Claims

1. An apparatus for the oxidation of water, said apparatus comprising a pressure tank (6) and a water pump (5), **characterized** in that a pump means (2, 9; 2', 9'; 2a, 9a) operating on the pressure fluctuations of water is connected to an intake pipe 7 between water pump (5) and a bottom valve in a manner that the pressure fluctuations of intake pipe (7) as a result of the operating and standing cycles of water pump (5) produce the movements of a water column carrying a float (2), a piston (2a) or a membrane (2') included in the pump means, said movements being adapted to supply a driving force for an air pump (2, 10; 2', 10'; 10a), from which the air is delivered into the water to be oxidized.

2. An apparatus as set forth in claim 1, **characterized** in that the piston of air pump (2, 10) comprises a water column (9), contained in a cylinder (3) and carrying on its surface a float (2) whose top and bottom sides are provided with sealing surfaces (17, 19) which, in the top and bottom position of float (2), respectively seal air pipes (11, 12) included in the top end of cylinder (3) and a water pipe (8) included in the bottom end thereof.

3. An apparatus as set forth in claim 2, **characterized** in that said air pipes (11, 12), which provide intake and pressure pipes for an air pump, are extended as a coaxial pipe through a plug (23) closing the top end of cylinder (3), and the bottom end of the coaxial pipe is surrounded by an annular bulge (16) which is in cooperation with said sealing surface (17).

4. An apparatus as set forth in claim 1, **characterized** in that the air pump comprises a bellows (10a) or a like having a change of volume which is multiple on each pumping strike compared with the change of volume of pump means (2a, 9a) serving as its driving device.

5. An apparatus as set forth in any of claims 1-4, **characterized** in that a tube or a hose is used to fit said pressure tank (6) with an atomizing nozzle (14), through which the pressure tank is allowed to gradually deplete.

6. An apparatus as set forth in claim 5, **characterized** in that a valve (4a) between pressure tank (6) and atomizing nozzle (14) is used to control the frequency of the operating cycles of water pump (5).

7. The application of an apparatus as set forth in any of claims 1-3, **characterized** in that the apparatus is used for the oxidation of well water.

## Patentansprüche

1. Eine Vorrichtung zum Oxydieren von Wasser, wobei die besagte Vorrichtung einen Druckbehälter (6) und eine Wasserpumpe (5) umfaßt, dadurch **gekennzeichnet**, daß ein auf die Wasserdruckschwankungen einwirkendes Pumpmittel (2, 9; 2', 9'; 2a, 9a) mit einem Einlaßrohr (7) zwischen der Wasserpumpe (5) und einem Bodenventil in Verbindung steht, so daß die durch die Arbeits- und Ruhezyklen der Wasserpumpe (5) bedingten Druckschwankungen in dem Einlaßrohr (7) die Bewegungen einer zu dem Pumpmittel gehörenden Wassersäule bewirken, die einen Schwimmkörper (2), einen Kolben (2a) bzw. eine Membran (2') trägt, wobei die besagten Bewegungen so beschaffen sind, daß sie eine Triebkraft für eine Luftpumpe (2, 10; 2', 10; 10a), durch die die Luft in das zu oxydierende Wasser gefördert wird, liefern.

2. Eine Vorrichtung nach Anspruch 1, dadurch **gekennzeichnet,** daß der Kolben der Luftpumpe (2, 10) eine in einem Zylinder (3) enthaltene und auf ihrer Oberfläche einen Schwimmkörper (2) tragende Wassersäule (9) umfaßt, wobei an der oberen bzw. unteren Seite des besagten Schwimmkörpers Abdichtflächen (17, 19) vorgesehen sind, die in der oberen bzw. unteren Lage des Schwimmkörpers (2) in dem oberen Ende des Zylinders (3) vorgesehene Luftrohre (11, 12) bzw. ein in dem unteren Ende des besagten Zylinders vorgesehenes Wasserrohr (8) abdichten.

3. Eine Vorrichtung nach Anspruch 2, dadurch **gekennzeichnet,** daß die besagten Luftrohre (11, 12), die als Einlaß- bzw. Druckrohr für eine Luftpumpe dienen, in der Form eines koaxialen, durch einen das obere Ende des Zylinders (3) verschließenden Verschlußkörper (23) führenden Rohres verlängert sind und das untere Ende des koaxialen Rohres durch einen mit der besagten Abdichtfläche (17) zusammenwirkenden Ringwulst (16) umgeben ist.

4. Eine Vorrichtung nach Anspruch 1, dadurch **gekennzeichnet,** daß die Luftpumpe einen Balg (10a) oder ein ähnliches Element umfaßt, dessen Volumensänderung bei jedem Pumphub einem Mehrfachen der Volumens änderung des als Treibvorrichtung des besagten Balges dienenden Pumpmittels (2a, 9a) entspricht.

5. Eine Vorrichtung nach einem der Ansprüche 1-4, dadurch **gekennzeichnet,** daß zwecks Ausstattung des besagten Druckbehälters (6) mit einer Zerstäubungsdüse (14), durch die allmähliche Entleerung des Druckbehälters ermöglicht wird, von einem Rohr oder einem Schlauch Gebrauch gemacht wird.

6. Eine Vorrichtung nach Anspruch 5, dadurch **gekennzeichnet**, daß zwischen dem Druckbehälter (6) und der Zerstäubungsdüse (14) von einem Ventil (4a) Gebrauch gemacht wird, um die Frequenz der Arbeitszyklen der Wasserpumpe (5) zu regeln.

7. Die Verwendung einer Vorrichtung nach einem der Ansprüche 1- 3, dadurch **gekennzeichnet,** daß die Vorrichtung zum Oxydieren von Brunnenwasser benutzt wird.

## Revendications

1. Appareil pour oxyder l'eau, ledit appareil comprenant un réservoir de pression (6) et une pompe à eau (5), caractérisé en ce qu'un moyen de pompe (2, 9; 2', 9'; 2a, 9a) agissant sur les fluctuations de pression de l'eau est relié à un tuyau d'aspiration (7) entre la pompe à eau (5) et un clapet inférieur d'une manière telle que les fluctuations de pression du tuyau d'aspiration (7) résultant des cycles de fonctionnement et d'arrêt de la pompe à eau (5) produisent les mouvements d'une colonne d'eau portant un flotteur (2), un piston (2a) ou une membrane (2') inclus dans le moyen de pompe, lesdits mouvements étant adaptés pour fournir une force motrice pour une pompe à air (2, 10; 2', 10'; 10a), d'où l'air est fourni dans l'eau à oxyder.

2. Appareil selon la revendication 1, caractérisé en ce que le piston de la pompe à air (2, 10) comprend une colonne d'eau (9), contenue dans un cylindre (3) et portant à sa surface un flotteur (2) dont les côtés supérieur et inférieur sont munis de surfaces d'étanchéité (17, 19) qui, dans les positions supérieure et inférieure du flotteur (2), obturent respectivement les tuyaux d'air (11, 12) inclus dans l'extrémité supérieure du cylindre (3) et un tuyau d'eau (8) inclus dans son extrémité inférieure.

3. Appareil selon la revendication 2, caractérisé en ce que lesdits tuyaux d'air (11, 12), qui constituent les tuyaux d'aspiration et de refoulement d'une pompe à air, sont prolongés sous forme de tuyau coaxial traversant un obturateur (23) fermant l'extrémité supérieure du cylindre (3), et en ce que l'extrémité inférieure du tuyau coaxial est entourée d'un renflement annulaire (16) qui coopère avec ladite surface d'étanchéité (17).

4. Appareil selon la revendication 1, caractérisé en ce que la pompe à air comprend un soufflet (10a) ou équivalent ayant un changement de volume qui, à chaque course de pompage, est un multiple du changement de volume du moyen de pompe (2a, 9a) servant à l'entraîner.

5. Appareil selon l'une quelconque des revendications 1-4, caractérisé en ce qu'un tube ou un tuyau flexible est utilisé pour munir ledit réservoir de pression (6) d'un atomiseur (14) par lequel le réservoir de pression peut se vider progressivement.

6. Appareil selon la revendication 5, caractérisé en ce qu'une vanne (4a) entre le réservoir de pression (6) et l'atomiseur (14) est utilisée pour régler la fréquence des cycles de fonctionnement de la pompe à eau (5).

7. Application de l'appareil selon d'une quelconque des revendications 1-3, caractérisée en ce que l'appareil est utilisé pour l'oxydation de l'eau de puits.
